# EUROPÄISCHE PATENTSCHRIFT

(11) **EP 1 813 471 B1**
(45) Veröffentlichungstag und Bekanntmachung des Hinweises auf die Patenterteilung: **15.01.2014**
(21) Anmeldenummer: 07001785.0
(22) Anmeldetag: 26.01.2007
(51) Int. Cl.: B60N 2/56

(54) **Einlegerteil für einen klimatisierten Sitz, Baugruppe mit mindestens zwei Einlegerteilen, Fahrzeugsitz, der ein solches Einlegerteil oder eine solche Baugruppe aufweist**
Insert for climatised seat, assembly with at least two inserts, vehicle seat showing such an insert or assembly
Partie d'insertion pour un siège climatisé, module doté d'au moins deux parties d'insertion, siège de véhicule automobile, comprenant une telle partie d'insertion ou un tel module

(30) Priorität: 30.01.2006 DE 102006004465
(43) Veröffentlichungstag der Anmeldung: 01.08.2007
(73) Patentinhaber: I.G. Bauerhin GmbH, 63584 Gründau (DE)
(72) Erfinder: Weber, Markus, 63584 Gründau (DE)
(74) Vertreter: Grimm, Ekkehard

(56) Entgegenhaltungen:
- WO-A-97/09908
- DE-A1- 10 010 986
- DE-A1- 10 259 621

## Beschreibung

Die vorliegende Erfindung betrifft einen belüfteten Fahrzeugsitz nach Anspruch 1.

Aus US 2005/0140189 A1 ist ein Insert bzw. Einlegerteil für einen ventilierten Sitz bekannt, welches aus einem Hauptteil und einer damit verbundenen Erweiterung besteht. Diese Erweiterung des Insert-Hauptteils führt von der Vorderseite zur Rückseite der ventilierten Sitzkomponente. An ihrem Ende besitzt sie eine Öffnung, auf die ein Lüfter angebracht wird. Durch diese Öffnung fördert der Lüfter Luft in eine offene Struktur im Innern der Erweiterung, von dort in das Hauptteil und schließlich durch eine Vielzahl von darin enthaltenen Öffnungen. Ein solches Insert ist aufwendig in die Sitzkomponenten zu integrieren, da zunächst die Erweiterung von der Vorderseite zur Rückseite der ventilierten Sitzkomponente verlegt werden muss. In einem weiteren Schritt wird die Erweiterung dann an den Lüfter angeschlossen, der zuvor an der Sitzstruktur befestigt wurde. Darüber hinaus sind ein erhöhter Aufwand an Montageschritten und Befestigungselementen notwendig, um den verwendeten Lüfter an die Sitzstruktur zu befestigen. Auch fördert der Lüfter über die Erweiterung nur an einer Stelle Luft in das Sitzkissen. Wird die Sitzoberfläche jedoch beispielsweise durch Abheftungen in mehrere Segmente unterteilt, sind diese weiter entfernten Sitzbereiche strömungstechnisch vom Lufteinlass abgetrennt, können also nicht belüftet werden.

US 6,857,697 B2 beschreibt einen ventilierten Sitz mit einem Insert, einem Lüfter und einem Rohr, welches Insert und Lüfter strömungstechnisch miteinander verbindet. Dieses Rohr wird zumindest teilweise vom Sitzkissen getragen und bildet einen Luftdurchlass durch das Sitzkissen. Das Sitzkissen selbst enthält zudem weitere Unterpassagen, die den Luftfluss des Rohres strömungstechnisch fortsetzen und weiterleiten.

Weiterhin schlägt die US 6,869,139 B2 einen ventilierten Sitz mit einem Insert vor, welches aus nur 2 Lagen besteht und an seinen Seiten offen ist. Hierbei müssen Insert, Lüfter und die strömungstechnische Verbindung zwischen beiden separat gehandhabt und nacheinander in den Sitz eingebaut werden. Für den elektrischen Lüfter sind weitere Befestigungskomponenten sowie Verdrahtungsaufwand erforderlich. Des weiteren fördert der Lüfter über das Rohr nur an einer Stelle Luft in das Sitzkissen. Wird die Sitzoberfläche jedoch beispielsweise durch Abheftungen in mehrere Segmente unterteilt, sind diese weiter entfernten Sitzbereiche strömungstechnisch vom Lufteinlass abgetrennt, können also nicht belüftet werden.

In DE 196 43 760 C1 wird ein elastisches Haltemittel für einen elektrisch betriebenen Lüfter beschrieben. Damit werden die vom rotierenden Lüfter erzeugten Vibrationen nicht auf die umgebende Haltevorrichtung übertragen, welche sich z.B. im Sitzkissen eines Fahrzeugsitzes befindet. Diese Konstruktion umfasst mehrere Einzelkomponenten, ist aufwendig zusammenzubauen und damit kostenintensiv.

Belüftete und beheizte Fahrzeugsitze, auch bezeichnet als Klimakomfortsitze, beinhalten typischerweise die folgenden Baugruppen: mindestens einen oder mehrere Axial- oder Radiallüfter, eine Luftvertellungsschicht, eine Heizzwischenlage, die speziell luftdurchlässig gestaltet ist, sowie die zugehörigen elektronischen Regelungen für Heizung und Lüftung. Hinzu kommen in der Regel noch Befestigungsbaugruppen und/oder Aufnahmen für die Lüfter. Diese haben gleichzeitig die Aufgabe, die Vibrationen des rotierenden Lüfters von der übrigen Sitzkonstruktion zu entkoppeln bzw, diese auf ein Mindestmaß zu dämpfen.

Im Allgemeinen werden alle diese Systemkomponenten separat voneinander gehandhabt, d.h. hergestellt, transportiert, in den Sitz eingebaut und ggf. miteinander verbunden. Dies hat erhöhten Logistik- und Handlingsaufwand zur Folge.

Die Komponenten können im Einzelnen wie folgt beschrieben werden.

Die heutigen belüfteten Sitze nutzen in der Mehrzahl ein sogenanntes Abstandsgewirke, um eine flächige Luftverteilungsschicht zu realisieren. Ein solches Abstandsgewirke ist ein dreidimensionales Gewirke, welches aus einer Ober- und einer Unterlage besteht, die durch dazwischen vertikal verlaufende Stützfasern auf Abstand gehalten werden.

Die Heizzwischenlage ist bereits seit vielen Jahren eine Standardkomponente in Automobilsitzen. Sie muss für den Einsatz in belüfteten Sitzen eine bestimmte Luftdurchlässigkeit aufweisen.

Zudem spielt sie als körpernahe Komponente eine wichtige Rolle für Feuchteaufnahme und -abtransport, was das Sitzklima mit beeinflusst.

Des weiteren kann sie zusammen mit der Belüftung betrieben werden. Der gleichzeitige Betrieb von Lüftung und Heizung kann bei richtiger Abstimmung einen Komfortzuwachs für das Sitzklima bedeuten,

Die elektronischen Regelungen von Heizung und Lüftung sind entweder Baugruppen innerhalb von Kabelsträngen (mit eigenem Gehäuse und Befestigung) oder sie werden in zentralen Sitzsteuergeräten integriert. Beide Varianten bringen erhöhten Verdrahtungsaufwand zwischen Elektronik und Heizungs/Lüftungskomponente mit sich. Darüber hinaus sind nachträgliche Änderungen, z.B. in Bezug auf Temperaturlevel oder die Befestigungen, schwierig und kostspielig durchzuführen.

Bei aktiv belüfteten Kraftfahrzeugsitzen befinden sich zudem Kleinventilatoren im Sitz- und Lehnenteil, die Luft in die oben genannten Luftverteilungsschicht fördern oder aus dieser Luft absaugen. Am häufigsten sind dies sogenannte Axiallüfter. Diese zeichnen sich durch hohe Luftmenge bei geringem Druckaufbau aus.

Neben dem Aspekt der Geräuschentwicklung durch turbulente Luft sind Vibrationen des Lüfters ein weiteres, wichtiges Kriterium beim Einsatz in Automobilsitzen. Um die Schwingungen und Vibrationen eines Lüfters von anderen Komponenten des Fahrzeugsitzes zu entkoppeln, werden oft große Anstrengungen unternommen. So werden spezielle Lüfter (z.B. mit Gummiaufhängungen) entwickett, sie werden präzisionsgewuchtet oder die Befestigung des Lüfters an der Sitzkonstruktion oder im Polster ist entsprechend aufwendig. Die notwendige Aufhängung bzw. Befestigung des Lüfters ist dann oft sehr teile- und montageintensiv und damit kostenintensiv.

Die DE 100 10 986 A1 beschreibt ein Polster für einen Fahrersitz mit mindestens einer luftdurchflutbaren Ventilationsschicht sowie mit im Polster integrierten Minilüftern zum Einblasen von Luft in die Ventilationsschicht, die in Hülsen aufgenommen sind, die ihrerseits in im Polster quer zu dessen Oberfläche verlaufenden, zur Polsteroberseite hin offenen Kanälen eingesetzt sind. Die die Miniaturlüfter aufnehmenden Hülsen weisen ein gegenüber dem lichten Durchmesser der Belüftungskanäle kleineren Außendurchmesser auf und sind in Achs- und Radialrichtung federelastisch ausgebildet.

Der vorliegenden Erfindung liegt nun die Aufgabe zugrunde, ein Einlegerteil zu schaffen, das alle Anforderungen an einen klimatisierten Fahrzeugsitz erfüllt und sich durch seine einfache Montage bei der Herstellung eines Fahrzeugsitzes auszeichnet.

Gelöst wird die Aufgabe durch einen Fahrzeugsitz gemäß einem der Ansprüche 1 bis 19.

Das Einlegerteil ist für die Belüftung und Beheizung von Sitzflächen sowie Lehnenflächen geeignet.

Die Erfindung kombiniert Heizlage, Luftverteilungsschicht, Lüfter und vibrationsentkoppelnde Strukturen sowie die erforderlichen elektrischen Leitungen und Baugruppen in einer Einheit, die schnell und einfach in einen Fahrzeugsitz montiert werden kann.

Das Einlegerteil gemäß der Erfindung ist für einen belüfteten Fahrzeugsitz zum Anordnen oberhalb einer einem Insassen zugewandten Seite eines Sitz- oder Lehnenkissens geeignet. Das Einlegerteil weist mindestens eine luftdurchlässige, obere Decklage, eine darunterliegende, dreidimensionale Luftverteilungsschicht und mindestens eine untere Decklage, die mindestens einen Lufteinlass umfasst, auf. An dem mindestens einen Lufteinlass ist eine ringförmige Komponente mit drei Abschnitten angeordnet ist. Der erste Abschnitt umfasst einen Flansch, mit dem diese Komponente bzw. dieses Teil gehalten ist. Der dritte Abschnitt bildet eine Lüfteraufnahme und der zweite, mittlere Abschnitt bildet eine den ersten und den dritten Abschnitt entkoppelnde Struktur.

Zwei oder mehr solcher Einlegerteile können zu einer Baugruppe zusammengefügt werden. Diese vorgefertigten Einlegerteile oder Baugruppen werden beispielsweise auf der Sitzfläche oder der Lehnenfläche eines Fahrzeugsitzes angeordnet.

In einer Ausführungsform der Erfindung wird eine Einleger-Baugruppe gebildet, die in Sitzen Verwendung findet, deren Oberfläche durch Abheftungen in mindestens zwei Segmente unterteilt sind.

Jedes dieser Segmente kann durch die Erfindung separat belüftet werden. Somit ist das Einlegerteil geeignet, um alle Bereiche einer Sitz- oder Lehnenfläche zu belüften.

Besonders vorteilhaft ist die Erfindung beispielsweise für ausfahrbare Sitzelemente wie Beinauflageverlängerungen, weil auch hier der Einleger inklusive Lüfter Platz findet.

Durch die besondere Anordnung des Lüfters ist dieser gegen mechanische Einflüsse geschützt. Die entkoppelnde Struktur verhindert störende Geräusche, die durch Anschlagen des Lüfters an andere Sitzstrukturkomponenten entstehen könnten. Auch kann die Restunwucht des Lüfters sowohl in axialer als auch radialer Richtung von der Sitzstruktur entkoppelt werden.

Auch ermöglicht der erfindungsgemäße Aufbau des Einlegerteils den Einsatz von axialen Lüftern, die typischerweise über eine niedrigere Geräuschentwicklung verfügen als Radiallüfter.

Die obere Decklage und die untere Decklage sind erfindungsgemäß entlang der seitlich umlaufenden Kante der Luftverteilungsschicht miteinander verbunden, so dass sich eine allseitig durch die Decklagen umschlossene Einheit ergibt.

Die obere Decklage ist entsprechend luftdurchlässig gestaltet, während die untere Decklage eine weitaus geringere Luftdurchlässigkeit als die obere Decklage aufweist.

Für einen elektrisch beheizbaren Sitz wird zwischen Luftvorteitungsschicht und oberer Decklage eine Heizlage angeordnet, die, über ein entsprechende Stromversorgung, die Sitz- oder Lehnenflächen beheizt.

Die entkoppelnde Struktur der Lüfteraufnahme wird bevorzugt durch elastische Elemente gebildet.

Die Lüfteraufnahme weist erfindungsgemäß an einem Ende einen Flansch auf, an dem sie gehalten ist. Dieser Flansch kann unmittelbar durch die die Unterseite des Aufnahmekörpers abdeckende Deckschicht überdeckt werden, um den Lüfter zu halten. Demzufolge sind keine weiteren, zusätzlichen Befestigungsmittel erforderlich.

Die entkoppelnde Struktur kann in wirksamer Weise durch radiale Rillen oder Wellen im Bereich des mittleren Abschnitts der Lüfteraufnahme gebildet werden.

Eine weitere Alternative, oder auch zusätzliche Maßnahme, für eine solche entkoppelnde Struktur ist diejenige, sie durch eine Faltenstruktur zu bilden.

Erfindungsgemäß ist die entkoppelnde Struktur auch durch ein Membranteil gebildet, das die entsprechenden Vibrationen abfedert und damit den ersten und den dritten Abschnitt der Lüfteraufnahme entkoppelt.

Um den entkoppelnden Effekt zu erhöhen, können im mittleren Abschnitt der Lüfteraufnahme in axialer Richtung verlaufende Schlitze ausgebildet werden, die diesem Abschnitt eine zusätzliche Elastizität und Flexibilität insbesondere in radialer Richtung verleihen. Die Schlitze können hierbei so ausgeführt werden, dass zwischen den einzelnen Schlitzen Stege gebildet sind.

Auch ist es möglich, in axialer Richtung verlaufenden Schlitze vorzusehen, die eine radiale Richtungskomponente aufweisen,

Solche Schlitze können dabei auch gegenläufige, radiale Komponenten aufweisen, so dass eine Nachgiebigkeit in diesen beiden gegenläufigen Richtungen gegeben ist.

Bevorzugt wird die Lüfteraufnahme aus einem synthetischen oder natürlichen Gummimaterial gebildet, das einfach in einem entsprechenden Formwerkzeug gespritzt werden kann. In Verbindung mit einer solchen Lüfteraufnahme aus einem synthetischen oder natürlichen Gummimaterial kann, um den Öffnungsquerschnitt innerhalb des Flanschs zu stabilisieren, im Bereich des Flanschs, insbesondere im Bereich dessen Rands, ein diesen aussteifendes Verstärkungsteil eingesetzt werden. Bei einem solchen Verstärkungsteil handelt es sich vorzugsweise um einen sich in den Flansch einlegenden Ring, wobei der Ring aussteifende Stege aufweist, die den Öffnungsquerschnitt durchqueren und so stabilisierend wirken.

Ein solcher Ring wird vorzugsweise in einer Ringnut des Flanschs eingesetzt und gehalten.

Für eine einfache Anbringung des Lüfters ist erfindungsgemäß der dritte, den Lüfter aufnehmende Abschnitt mit mindestens einer den Lüfter haltenden, ringförmigen Nut versehen; in diese Nut wird ein entsprechendes Flansch- oder Ringteil des Lüfters eingeklemmt, um den Lüfter ohne weitere Befestigungsmittel zu halten.

Vorzugsweise wird die Lüfteraufnahme rotationssymmetrisch aufgebaut.

Im Bereich der Unterseite des Aufnahmekörpers, die durch die untere Deckschicht abgedeckt ist, können elektrische/elektronische Baukomponenten angeordnet werden, die durch die Deckschicht gehalten und gleichzeitig abgedeckt und damit geschützt sind.

Aus mindestens zwei Einlegerteilen, wie sie vorstehend beschrieben sind, kann eine Baugruppe aufgebaut sein. Das jeweilige Einlegerteil einer solchen Baugruppe wird dann so dimensioniert, dass es einem bestimmten Bereich einer Sitzfläche und/oder einer Rückenlehne eines Fahrzeugsitzes zugeordnet wird; eine solche Baugruppe kann dann, als eine Einheit vorgefertigt, in den Sitz bei dessen Herstellung eingefügt werden.

Die zwei Einlegerteile werden hierzu entlang einer Seitenkante miteinander verbunden.

Weiterhin kann an der einen Seitenkante des einen Einlegerteils, die der Seitenkante gegenüberliegt, mit der dieses Einlegerteil mit dem weiteren Einlegerteil verbunden ist, ein Verlängerungsabschnitt vorgesehen werden. Dieser Verlängerungsabschnitt ist aus der oberen und/oder der unteren Decklage gebildet, so dass sich ein flacher Körper ergibt. Gegbenenfalls können weitere Zwischenlagen eingefügt werden.

Der Verlängerungsabschnitt kann dazu dienen, elektrische Versorgungsleitungen zu dem freien Ende des Verlängerungsabschnitts und damit zu dem Ende der Baugruppe zu führen, um beim Einbau dieser Baugruppe die Enden der Versorgungsleitungen im Sitz zu befestigen und/oder aus dem Sitz herauszuführen.

Weitere Einzelheiten und Merkmale der Erfindung ergeben sich aus der nachfolgenden Beschreibung eines Ausführungsbeispiels anhand der Zeichnungen, In der Zeichnung zeigt
- Figur 1: eine perspektivische Ansicht auf die Unterseite eines Einlegerteil gemäß der Erfindung,
- Figur 2: eine Seitenansicht des Einlegerteils der Figur 1,
- Figur 3: eine Draufsicht auf die Unterseite des Einlegerteils der Figuren 1 und 2,
- Figur 4: eine Seitenansicht des Einlegerteils entsprechend der Figur 2 in einer abgewandelten Form,
- Figur 5: eine Draufsicht auf die Unterseite des Einlegerteils der Figur 4,
- Figur 6: eine perspektivische Explosionsansicht einer Lüfteraufnahme mit Lüfter, von der Seite des Lüfters aus gesehen, wie sie in das Einlegerteil eingesetzt ist, das in den Figuren 1 bis 3 dargestellt ist,
- Figur 7: die Lüfteraufnahme mit Lüfter der Figur 6, von der gegenüberliegenden Seite aus gesehen,
- Figur 8: eine perspektivische Ansicht eines Schaumkerns für das Sitzkissen eines Fahrzeugsitzes, von der Oberseite aus gesehen, mit einer darauf angeordneten Einlegerteil-Baugruppe,
- Figur 9: den Schaumkern der Figur 8, von der Unterseite aus gesehen,
- Figur 10: die Einleger-Baugruppe der Figuren 8 und 9, von der Oberseite aus gesehen,
- Figur 11: die Einleger-Baugruppe der Figur 10, von der Oberseite aus gesehen,
- Figur 12: die Anordnung der Figur 8 in einer Draufsicht,
- Figur 13: einen Schnitt entlang der Schnittlinie XIII-XIII der Figur 12, und
- Figur 14: einen Schnitt der Einleger-Baugruppe der Figur 13.

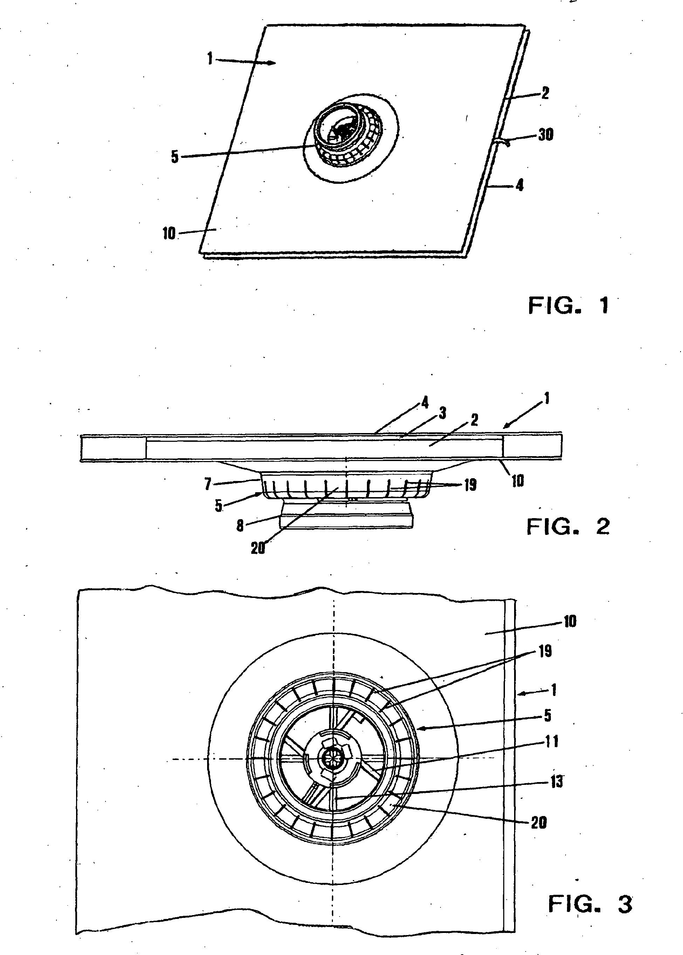

Die Figuren 1 bis 3 zeigen ein Einlegerteil 1, das für einen belüfteten Fahrzeugsitz einsetzbar ist, Dieses Einlegerteil 1 umfasst eine dreidimensionale Luftvertellungsschicht 2, oberhalb der eine Heizlage 3 aufgelegt ist. Diese Heizlage 3 ist wiederum mit einer oberen Decklage 4 abgedeckt, An der Unterseite der Luftverteilungsschicht 2 befindet sich eine ringförmige Komponente 5. Diese ringförmige Komponente 5, die im Bereich einer nicht in den Figuren 1 bis 3 zu sehenden Durchgangsöffnung in der Luftverteilungsschicht 2 angeordnet ist, ist in drei Abschnitte 6,7 und 8 unterteilbar.

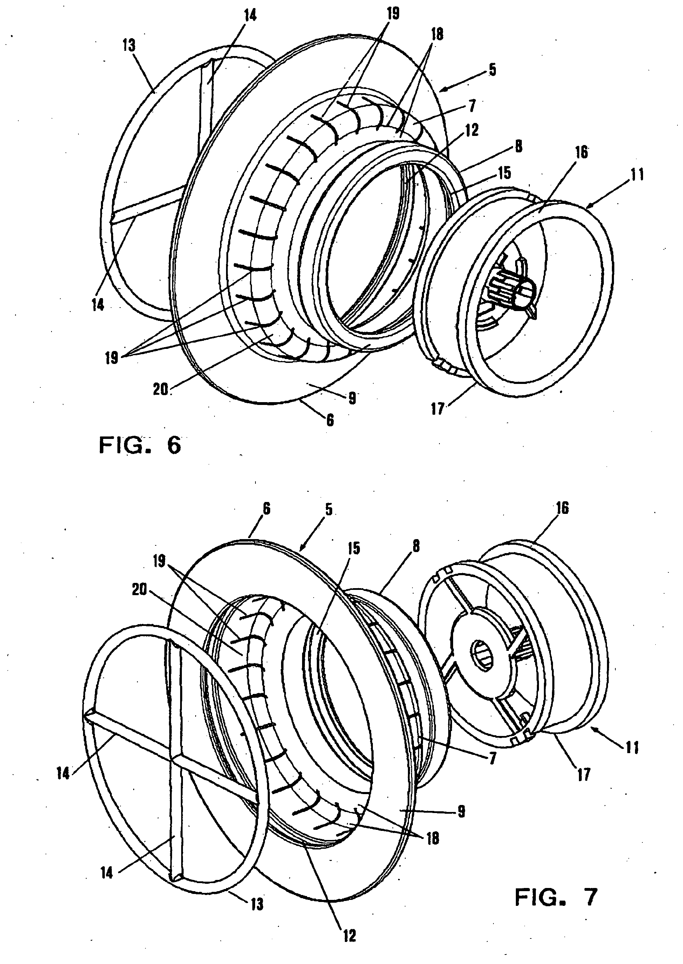

Die ringförmige Komponente 5 der Figuren 1 bis 3 ist detaillierter in den perspektivischen Explosionsansichten der Figuren 6 und 7 zu sehen.

Der erste Abschnitt 6 der ringförmigen Komponenten 5 umfasst einen Flansch 9, mit dem die ringförmige Komponente 5 an der Unterseite der Luftverteilungsschicht 2 flächig anliegt. Die Außenseite des Flanschs 9 ist, wie die Figuren 1 bis 3 zeigen, durch eine untere Decklage 10 abgedeckt, die den Flansch 9 hält und auch die Unterseite der Luftverteilungsschicht 2 abdeckt.

Der dritte Abschnitt 8, bildet eine Lüfteraufnahme, in der ein elektrischer Axiallüfter 11 eingesetzt wird. Der erste und der dritte Abschnitt 6, 8 sind über den zweiten Abschnitt 7 verbunden. Dieser mittlere Abschnitt 7 dient als eine den ersten und den dritten Abschnitt 6,8 entkoppelnde Struktur.

Die gesamte ringförmige Komponente 5, aus einem synthetischen oder natürlichen Gummimaterial gebildet, ist rotationssymmetrisch aufgebaut.

Um den aufgrund des Gummimaterials elastischen und nachgiebigen Flansch 9 auszusteifen, ist in eine Ringnut 12 in der öffnungsseitigen Stirnseite des Flanschs 9 ein ringförmiges Verstärkungsteil 13 eingesetzt. Das Verstärkungsteil 13 selbst ist durch kreuzförmig angeordnete Stege 14 ausgesteift, die den freien Öffnungsquerschnitt des ersten Abschnitts durchqueren.

Um den Lüfter 11 in dem dritten Abschnitt 8 zu halten, weist dieser dritte Abschnitt 8 der ringförmigen Komponente 5 mindestens eine ringförmige Nute 15 auf, in die sich der mindestens eine äußere Ringflansch 18 des I-üftergehäuses 17 einlegt. Dadurch kann der Lüfter 11 ohne weitere Befestigungsteile, und ohne dass Werkzeuge benötigt werden, in die ringförmige Komponente 5 eingesetzt werden.

Die obere Decklage 4 und die untere Decklage 10 sind entlang der seitlich :umlaufenden Kante der Luftvertellungsschicht 2 miteinander verbunden sind

Wie bereits erwähnt, dient der mittlere, zweite Abschnitt 7 dazu, den ersten Abschnitt 6 mit dem Flansch 9 von dem dritten Abschnitt 8 zu entkoppeln. Um dies zu erreichen, ist dieser mittlere Abschnitt 7 wesentlich elastischer ausgestaltet als die weiteren Bereiche, d.h. der erste Abschnitt 6 und der dritte Abschnitt 8.

Wie insbesondere anhand der Figuren 6 und 7 zu sehen ist, sind hierzu radiale Rillen oder Wellen 18 vorhanden, die auch eine Art einer Faltenstruktur bilden.

Eine solche Faltenstruktur könnte auch als ein Membranteil ausgeführt werden. Wesentlich ist, dass der mittlere Abschnitt 7 zumindest in axialer Richtung eine große, federnde Nachgiebigkeit zeigt, die in der gezeigten Ausführungsform der ringförmigen Komponenten 5 zum einen durch das weiche Gummimaterial und zum anderen durch die Strukturierung erreicht wird.

Um diese Nachgiebigkeit noch zu verstärken, sind zusätzlich in dem mittleren Abschnitt 7 in axialer Richtung verlaufende Schlitze 19 vorhanden. Bei diesen Schlitzen 19 handelt es sich um Durchbrechungen bzw. Ausstanzungen. Die Schlitze 19 sind so voneinander in radialer Richtung beabstandet, dass zwischen benachbarten Schlitzen 19 schmale Stege 20 entstehen. Diese Stege 20 sind etwa 5mm bis 10 mm breit. Durch die Breite der Stege 20 bzw. die Anzahl der Schlitze 19 kann die Nachgiebigkeit des zweiten Abschnitts 7 eingestellt werden. Diese Schlitze 19 dämpfen insbesondere Schwingungen in radialer Richtung, die von dem Lüfter 11 beispielsweise durch Unwucht hervorgerufen werden.

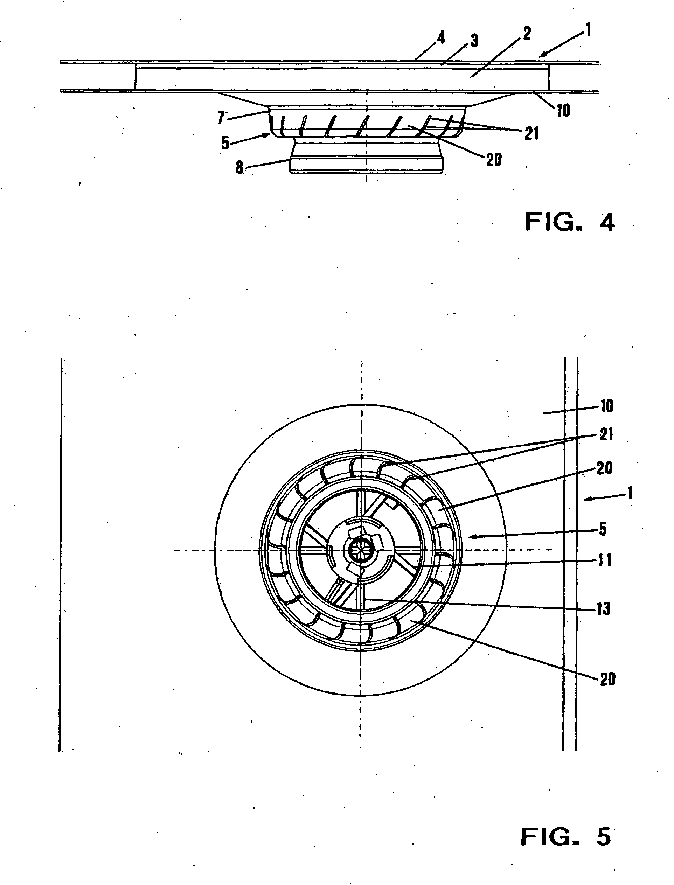

Die Schlitze 19, wie sie vorstehend beschrieben sind und in der Ausführungsform der Figuren 1 bis 3, 6 und 7 und gezeigt sind, können auch schräg ausgeführt werden, so dass sie eine in axialer Richtung verlaufende Richtungskomponente aufweisen. Solche Schlitze sind mit dem Bezugszeichen 21 bezeichnet und in den Figuren 4 und 5 zu sehen; ansonsten entspricht das Einlegerteil 1 mit der ringförmigen Komponenten 5 demjenigen der Figuren 2 und 3. Solche schrägen Schlitze 21 können in Abhängigkeit der Drehrichtung des Lüfters 11 in radialer Richtung von links nach rechts oder von rechts nach links verlaufen, Auch wenn es nicht in den Figuren dargestellt ist, können solche Schlitze 21 auch gegenläufige, radiale Komponenten aufweisen. Hierbei können die Schlitze 21. so gelegt werden, dass sie sich kreuzen.

Falls erforderlich, können auf der Unterseite der Luftverteilungsschicht 2 elektrische/elektronische Baukomponenten angeordnet werden, die durch die untere Decklage 10 abgedeckt werden,

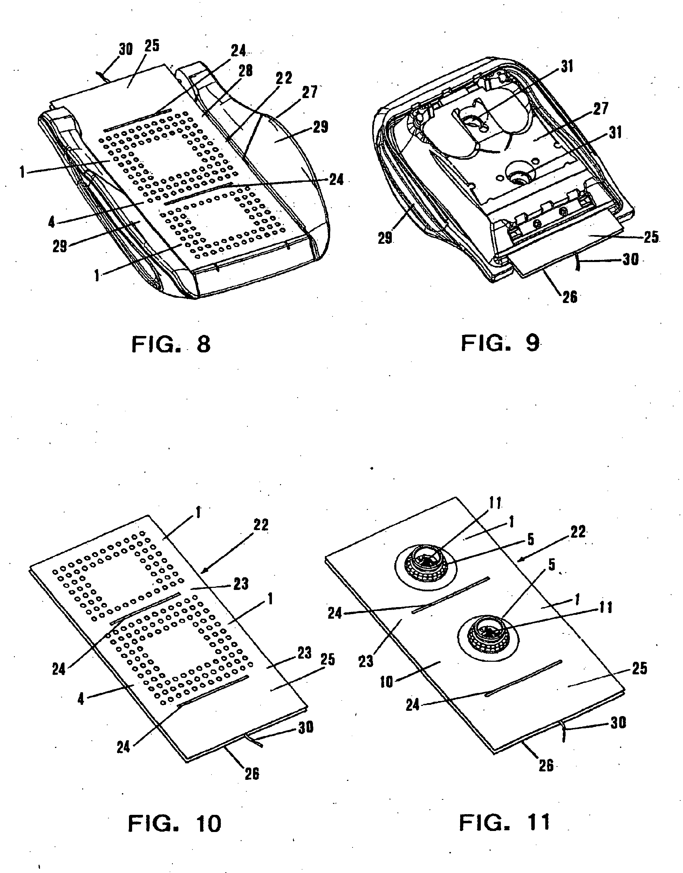

Während die vorstehenden Ausführungsformen ein einzelnes Einlegerteil 1 mit einem Lüfter 11 darstellen, können mehrere solcher Einlegerteile 1 zu eine Baugruppe zusammengefasst werden. Eine solche Baugruppe 22 ist in den Figuren 10 und 11 sowie der Figur 14 gezeigt.

Es sollte daraufhin gewiesen werden, dass Bauteile einer Ausführungsform, die identisch oder ähnlich zu solchen einer anderen Ausführungsform sind, mit den entsprechenden Bezugszeichen gekennzeichnet sind, und die Beschreibung zu einer Ausführungsform kann analog auf die andere Ausführungsform übertragen werden.

Die Baugruppe 22 in den Figuren 10 und 11 umfasst zwei Einlegerteile 1, die in ihrem Aufbau den Einlegerteilen 1 entsprechen, wie sie vorstehend beschrieben sind. In dieser Baugruppe 22 sind die beiden Einlegerteile 1 entlang einer Seitenkante 23, dort an den Rändern, miteinander verbunden. Durch den so entstehenden Trennschlitz 24 sind die beiden Einlegerteile 1 zueinander gut beweglich und strömungstechnisch voneinander unabhängig.

Diese Baugruppe 22 umfasst weiterhin einen Verlängerungsabschnitt 25, der an der anderen Seitenkante 23 des mittleren Einlegerteil 1 mit diesem verbunden ist, wiederum über Stege mit einem Trennschlitz 24 dazwischen. Dieser Verlängerungsabschnitt 25 dient dazu, elektrische Versorgungsleitungen 30 zu dessen freiem Ende 26 und damit zu dem Ende der Baugruppe zu führen. Ein solcher Verlängerungsabschnitt 25 sollte zumindest aus der oberen und/oder der unteren Decklage 4, 10 in Form eines flachen Körpers aufgebaut sein. Die obere Decklage 4 und die untere Decklage 10 decken darüber hinaus auch die Seitenkanten der gesamten Baugruppe ab, indem die obere Decklage 4 und die untere Decklage 10 im Bereich der Seitenkanten miteinander verbunden sind.

Die beiden Bereiche der oberen Decklage 4 der zwei Einlegerteile 1 sind für einen ausreichenden Luftdurchsatz gelocht, zumindest an den Flächen,' die nicht unmittelbar oberhalb des jeweiligen Lüfters 11 liegen.

Die Baugruppe 22 aus den beiden Einlegerteilen 1 und dem Verlängerungsabschnitt 25 sind dazu vorgesehen, auf dem Sitzkissen eines Fahrzeugsitzes aufgelegt zu werden, um diesen Bereich zu klimatisieren.

Ein entsprechender Schaumkern 27 mit einem Sitzflächenabschnitt 28 und zwei seitlichen Wangen 29 und darauf aufgelegter Baugruppe 22, wie dies in den Figuren 10 und 11 dargestellt ist, ist in den Figuren 8, 9 und 12 gezeigt. Während die beiden Einlegerteile 1 den Sitzflächenabschnitt 28 abdecken, ist der Verlängerungsabschnitt 25 an dem hinteren Ende überstehend, um die elektrischen Versorgngsleitungen 30 zum Anschluß herauszuführen.

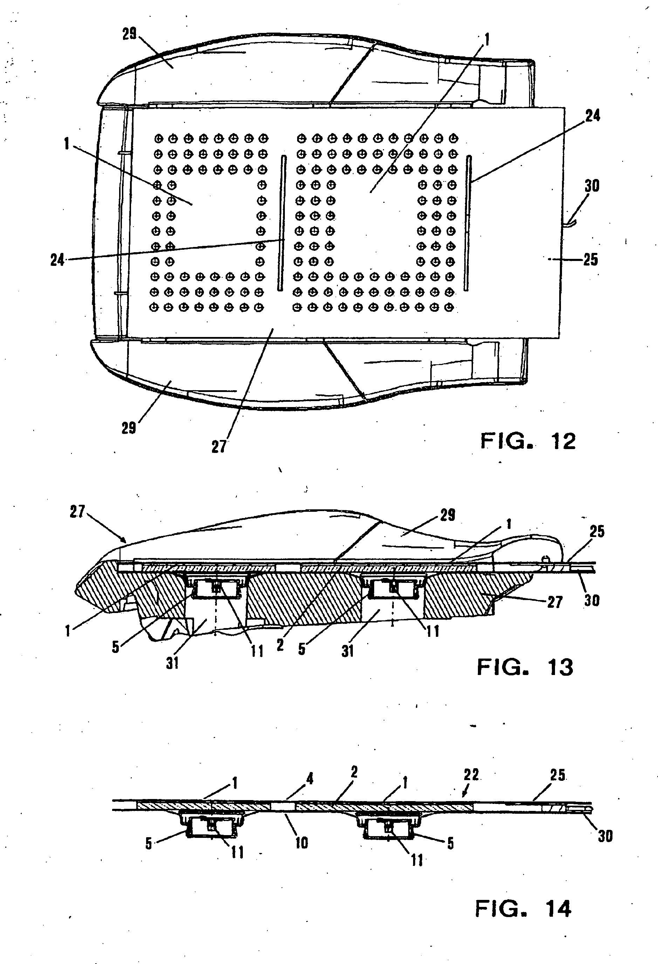

Die Baugruppe 22 der Figuren 10 und 11 ist nochmals in einer Schnittdarstellung in Figur 14 zu sehen, in der die Lage und Orientierung der ringförmigen Komponenten 5 und des darin gehaltenen Lüfters 11 deutlich wird. Weiterhin ist in Figur 13 zu sehen, dass der Schaumkern 27 zwei zylindrische Ausnehmungen 31 aufweist, in die die ringförmigen Komponenten 5 mit dem Lüfter 11 jeweils frei hineinhängen.

insbesondere anhand der Figur 13 wird auch deutlich, dass die Sitzstruktur schnell mit der vorgefertigten Baugruppe 22 montiert werden kann, was zu Kosteneinsparungen führt, aber auch die Zuverlässigkeit fördert, da die Einieger-Baugruppe vor ihrer Montage in ihrer Gesamtheit getestet werden kann.

## Patentansprüche

1. Belüfteter Fahrzeugsitz mit einer Baugruppe in Form mindestens eines vorgefertigten Einlegerteils, das oberhalb einer einem Insassen zugewandten Seite eines Sitz- oder Lehnenkissens angeordnet ist, mit mindestens einer luftdurchlässigen, oberen Decklage, einer darunterliegenden, dreidimensionalen Luftverteilungsschicht und mindestens einer unteren Decklage, die mindestens einen Lufteinlass umfasst, an dem eine ringförmige Komponente (5) mit drei Abschnitten (6, 7, 8) angeordnet ist, wobei der erste Abschnitt (6) einen Flansch (9) umfasst, mit dem die Komponente (5) gehalten ist, der dritte Abschnitt (8) eine Lüfteraufnahme bildet und der zweite, mittlere Abschnitt eine den ersten und den dritten Abschnitt (6, 8) entkoppelnde Struktur (7; 18; 19; 20) bildet, wobei die obere Decklage (4) und die untere Decklage (10) entlang der seitlich umlaufenden Kante der Luftverteilungsschicht (2) miteinander verbunden sind und wobei der Flansch (9) des ersten Abschnitts (6) der ringförmigen Komponenten (5) durch die untere Decklage (10) abgedeckt gehalten ist, wobei die entkoppelnde Struktur durch ein Membranteil gebildet ist, der dritte Abschnitt (8) der ringförmigen Komponenten (5) eine einen Lüfter (11) haltende, ringförmige Nut (15) aufweist und die ringförmige Komponente (5) frei hängend in einer Ausnehmung (31) des Sitz- oder Lehnenkissens (25) aufgenommen ist.

2. Fahrzeugsitz nach Anspruch 1, **dadurch gekennzeichnet, dass** zwischen der Luftverteilungsschicht (2) und der oberen Decklage (4) eine Heizlage (3) angeordnet ist.

3. Fahrzeugsitz nach Anspruch 1 oder 2, **dadurch gekennzeichnet, dass** die entkoppelnde Struktur (7; 18; 19; 20) durch elastische Elemente gebildet ist.

4. Fahrzeugsitz nach einem der Ansprüche 1 bis 3, **dadurch gekennzeichnet, dass** die entkoppelnde Struktur durch radiale Rillen oder Wellen (7; 18) gebildet ist.

5. Fahrzeugsitz nach einem der Ansprüche 1 bis 4, **dadurch gekennzeichnet, dass** die entkoppelnde Struktur durch eine Faltenstruktur gebildet ist.

6. Fahrzeugsitz nach einem der Ansprüche 1 bis 5, **dadurch gekennzeichnet, dass** der mittlere Abschnitt (7) in axialer Richtung verlaufende Schlitze (19) aufweist.

7. Fahrzeugsitz nach Anspruch 6, **dadurch gekennzeichnet, dass** zwischen den einzeinen Schlitzen (19) Stege (20) gebildet sind.

8. Fahrzeugsitz nach Anspruch 6, **dadurch gekennzeichnet, dass** die in axialer Richtung verlaufenden Schlitze (21) eine radiale Richtungskomponente aufweisen.

9. Fahrzeugsitz nach Anspruch 8, **dadurch gekennzeichnet, dass** die jeweiligen Schlitze (21) gegenläufige, radiale Komponenten aufweisen.

10. Fahrzeugsitz nach einem der Ansprüche 1 bis 9, **dadurch gekennzeichnet, dass** die ringförmige Komponente (5) aus einem synthetischen oder natürlichen Gummimaterial gebildet ist.

11. Fahrzeugsitz nach einem der Ansprüche 1 bis 10, **dadurch gekennzeichnet, dass** der Flansch (9) des ersten Abschnitts (6) eine formschlüssige Verbindung mit der Luftverteilungsschicht (2) einerseits und der unteren Decklage (10) andererseits bildet.

12. Fahrzeugsitz nach einem der Ansprüche 1 bis 11, **dadurch gekennzeichnet, dass** im Bereich des Flanschs (9) des ersten Abschnitts (6) ein den Flansch (9) aussteifendes Verstärkungsteil (13, 14) eingesetzt ist.

13. Fahrzeugsitz nach Anspruch 12, **dadurch gekennzeichnet, dass** das Verstärkungsteil einen sich in den Flansch (9) einlegenden Ring (13) sowie den Ring (13) aussteifende Stege (14) aufweist.

14. Fahrzeugsitz nach Anspruch 13, **dadurch gekennzeichnet, dass** der Ring (13) in einer Ringnut (12) des Flanschs (9) gehalten ist.

15. Fahrzeugsitz nach einem der Ansprüche 1 bis 14, **dadurch gekennzeichnet, dass** die ringförmige Komponente (5) rotationssymmetrisch aufgebaut ist.

16. Fahrzeugsitz nach einem der Ansprüche 1 bis 15, **dadurch gekennzeichnet, dass** auf der Unterseite der Luftverteilungsschicht (2), durch die untere Decklage (10) abgedeckt, elektrische/elektronische Baukomponenten (30) angeordnet sind.

17. Fahrzeugsitz nach einem der Ansprüche 1 bis 16 mit einer Baugruppe mit mindestens zwei Einlegerteilen (1), die entlang einer Seitenkante (23) miteinander verbunden sind.

18. Fahrzeugsitz nach Anspruch 17, **dadurch gekennzeichnet, dass** an der einen Seitenkante (23) des einen Einlegerteils (1), die der Seitenkante (23) gegenüberliegt, mit der dieses Einlegerteil (1) mit dem weiteren Einlegerteil (1) verbunden ist, ein Verlängerungsabschnitt (25) angeordnet ist, der elektrische Versorgungsleitungen (30) zu dem freien Ende des Verlängerungsabschnitts (25) und damit zu dem Ende der Baugruppe (22) führt.

19. Fahrzeugsitz nach Anspruch 18, **dadurch gekennzeichnet, dass** der Verlängerungsabschnitt (25) zumindest aus der oberen und/oder der unteren Decklage (4; 10) aufgebaut ist.

## Claims

1. A ventilated vehicle seat comprising an assembly in the form of at least one prefabricated insert part which is arranged above a side of a seat or backrest cushion facing a passenger, comprising at least one air-permeable upper cover layer, a three-dimensional air distribution layer positioned thereunder and at least one lower cover layer including at least one air inlet on which a ring-shaped component (5) having three sections (6, 7, 8) is arranged, wherein the first section (6) comprises a flange (9) with which the component (5) is held, the third section (8) forms a fan receiver and the second central section forms a structure (7; 18; 19; 20) decoupling the first and the third section (6, 8), wherein the upper cover layer (4) and the lower cover layer (10) are interconnected along the laterally surrounding edge of the air distribution layer (2) and wherein the flange (9) of the first section (6) of the ring-shaped component (5) is held covered by the lower cover layer (10), wherein the decoupling structure is formed by a membrane member, the third section (8) of the ring-shaped component (5) comprises a ring-shaped groove (15) holding a fan (11), and the ring-shaped component (5) is received freely suspended in a recess (31) of the seat or backrest cushion (25).

2. The vehicle seat according to claim 1, **characterized in that** a heating layer (3) is arranged between the air distribution layer (2) and the upper cover layer (4).

3. The vehicle seat according to claim 1 or 2, **characterized in that** the decoupling structure (7; 18; 19; 20) is formed by elastic elements.

4. The vehicle seat according to any one of claims 1 to 3, **characterized in that** the decoupling structure is formed by radial grooves or corrugations (7; 18).

5. The vehicle seat according to any one of claims 1 to 4, **characterized in that** the decoupling structure is formed by a fold structure.

6. The vehicle seat according to any one of claims 1 to 5, **characterized in that** the central section (7) comprises slits (19) extending in axial direction.

7. The vehicle seat according to claim 6, **characterized in that** webs (20) are formed between the individual slits (19).

8. The vehicle seat according to claim 6, **characterized in that** the slits (21) extending in axial direction comprise a radial direction component.

9. The vehicle seat according to claim 8, **characterized in that** the respective slits (21) comprise opposite radial components.

10. The vehicle seat according to any one of claims 1 to 9, **characterized in that** the ring-shaped component (5) is formed of a synthetic or natural rubber material.

11. The vehicle seat according to any one of claims 1 to 10, **characterized in that** the flange (9) of the first section (6) forms a form-locking connection with the air distribution layer (2) on the one hand and with the lower cover layer (10) on the other hand.

12. The vehicle seat according to any one of claims 1 to 11, **characterized in that** a reinforcement member (13, 14) which stiffens the flange (9) is inserted in the area of the flange (9) of the first section (6).

13. The vehicle seat according to claim 12, **characterized in that** the reinforcement member comprises a ring (13) fitting into the flange (9) as well as webs (14) stiffening the ring (13).

14. The vehicle seat according to claim 13, **characterized in that** the ring (13) is held in an annular groove (12) of the flange (9).

15. The vehicle seat according to any one of claims 1 to 14, **characterized in that** the ring-shaped component (5) has a rotation-symmetrical structure.

16. The vehicle seat according to any one of claims 1 to 15, **characterized in that** electrical/electronic structural components (30) are arranged, covered by the lower cover layer (10), on the bottom side of the air distribution layer (2).

17. The vehicle seat according to any one of claims 1 to 16, comprising an assembly with at least two insert parts (1) that are interconnected along a side edge (23).

18. The vehicle seat according to claim 17, **characterized in that** the one side edge (23) of the one insert part (1) opposite to the side edge (23) with which said insert part (1) is connected to the further insert part (1) has arranged thereon an extension section (25) which guides electrical supply lines (30) to the free end of the extension section (25) and thus to the end of the assembly (22).

19. The vehicle seat according to claim 18, **characterized in that** the extension section (25) is composed at least of the upper and/or of the lower cover layer (4; 10).

## Revendications

1. Siège de véhicule, ventilé, comportant un module sous la forme d'au moins une pièce d'insert préfabriquée, qui est agencée au-dessus d'un côté, dirigé vers un occupant du véhicule, d'un coussin d'assise ou de dossier, et qui comprend une couche de couverture supérieure, perméable à l'air, une couche tridimensionnelle de distribution d'air, située en-dessous de la précédente, et au moins une couche de couverture inférieure, qui présente au moins une entrée d'air au niveau de laquelle est agencé un composant (5) de forme annulaire présentant trois tronçons (6, 7, 8), siège dans lequel le premier tronçon (6) comprend un flasque (9) à l'aide duquel est maintenu le composant (5), le troisième tronçon (8) forme un logement d'accueil de ventilateur, et le deuxième tronçon central forme une structure (7; 18; 19; 20) découplant le premier et le troisième tronçon (6, 8), dans lequel la couche de couverture supérieure (4) et la couche de couverture inférieure (10) sont reliées l'une à l'autre le long du bord périphérique latéral de la couche de distribution d'air (2), et dans lequel le flasque (9) du premier tronçon (6) du composant (5) de forme annulaire est maintenu recouvert par la couche de couverture inférieure (10), et dans lequel la structure de découplage est formée par une partie de membrane, le troisième tronçon (8) du composant (5) de forme annulaire présente une rainure (15) de forme annulaire assurant le maintien d'un ventilateur (11), et le composant (5) de forme annulaire est logé de manière librement suspendue dans un évidement (31) du cousin d'assise ou de dossier (25).

2. Siège de véhicule selon la revendication 1, **caractérisé en ce qu'**entre la couche de distribution d'air (2) et la couche de couverture supérieure (4), est agencée une couche chauffante (3).

3. Siège de véhicule selon la revendication 1 ou la revendication 2, **caractérisé en ce que** la structure de découplage (7; 18; 19; 20) est formée par des éléments élastiques.

4. Siège de véhicule selon l'une des revendications 1 à 3, **caractérisé en ce que** la structure de découplage est formée par des stries ou des ondes radiales (7; 18).

5. Siège de véhicule selon l'une des revendications 1 à 4, **caractérisé en ce que** la structure de découplage est formée par une structure en soufflet.

6. Siège de véhicule selon l'une des revendications 1 à 5, **caractérisé en ce que** le tronçon central (7) présente des fentes (19) s'étendant dans la direction axiale.

7. Siège de véhicule selon la revendication 6, **caractérisé en ce qu'**entre les fentes (19) individuelles, sont formées des nervures (20).

8. Siège de véhicule selon la revendication 6, **caractérisé en ce que** les fentes (21) s'étendant dans la direction axiale présentent une composante de direction radiale.

9. Siège de véhicule selon la revendication 8, **caractérisé en ce que** les fentes (21) respectivement considérées présentent des composantes radiales opposées.

10. Siège de véhicule selon l'une des revendications 1 à 9, **caractérisé en ce que** le composant (5) de forme annulaire est réalisé en un matériau de caoutchouc synthétique ou naturel.

11. Siège de véhicule selon l'une des revendications 1 à 10, **caractérisé en ce que** le flasque (9) du premier tronçon (6) réalise une liaison par complémentarité de formes avec la couche de distribution d'air (2) d'une part et avec la couche de couverture inférieure (10) d'autre part.

12. Siège de véhicule selon l'une des revendications 1 à 11, **caractérisé en ce que** dans la zone du flasque (9) du premier tronçon (6), est insérée une pièce de renfort (13, 14) rigidifiant le flasque (9).

13. Siège de véhicule selon la revendication 12, **caractérisé en ce que** la pièce de renfort présente un anneau (13) venant se placer dans le flasque (9), ainsi que des nervures (14) rigidifiant l'anneau (13).

14. Siège de véhicule selon la revendication 13, **caractérisé en ce que** l'anneau (13) est maintenu dans une rainure annulaire (12) du flasque (9).

15. Siège de véhicule selon l'une des revendications 1 à 14, **caractérisé en ce que** le composant (5) de forme annulaire est d'une construction à symétrie de rotation.

16. Siège de véhicule selon l'une des revendications 1 à 15, **caractérisé en ce que** sur le côté inférieur de la couche de distribution d'air (2), sont agencés, en étant recouverts par la couche de couverture inférieure (10), des composants électriques/électroniques (30).

17. Siège de véhicule selon l'une des revendications 1 à 16, comprenant un module avec au moins deux pièces d'insert (1), qui sont reliées l'une à l'autre le long d'un bord latéral (23).

18. Siège de véhicule selon la revendication 17, **caractérisé en ce que** sur un bord latéral (23) d'une pièce d'insert (1), qui est opposé au bord latéral (23) avec lequel cette pièce d'insert (1) est reliée à l'autre pièce d'insert (1), est agencé un tronçon prolongateur (25), qui amène des conducteurs d'alimentation électrique (30) à l'extrémité libre du tronçon prolongateur (25), et ainsi à l'extrémité du module (22).

19. Siège de véhicule selon la revendication 18, **caractérisé en ce que** le tronçon prolongateur (25) est constitué au moins par la couche de couverture supérieure et/ou inférieure (4; 10).
